# EUROPÄISCHE PATENTSCHRIFT

(11) **EP 2 197 566 B1**
(45) Veröffentlichungstag und Bekanntmachung des Hinweises auf die Patenterteilung: **02.05.2012**
(21) Anmeldenummer: 08785494.9
(22) Anmeldetag: 12.08.2008
(51) Int. Cl.: B01D 53/14, C10L 3/10

(54) **VERFAHREN UND ANLAGE ZUR REGENERATION EINER BEI DER REINIGUNG VON GASEN ANFALLENDEN AMINHALTIGEN WASCHLÖSUNG**
METHOD AND SYSTEM FOR REGENERATING AN AMINE-CONTAINING WASH SOLUTION OBTAINED DURING GAS PURIFICATION
PROCÉDÉ ET INSTALLATION DE RÉGÉNÉRATION D'UNE SOLUTION DE LAVAGE RENFERMANT DES AMINES OBTENUE LORS DE L'ÉPURATION DE GAZ

(30) Priorität: 09.10.2007 DE 102007048565
(43) Veröffentlichungstag der Anmeldung: 23.06.2010
(73) Patentinhaber: MT-Biomethan GmbH, 27404 Zeven (DE)
(72) Erfinder: GÜNTHER, Lothar, 82538 Geretsried (DE)
(74) Vertreter: Tragsdorf, Bodo
(86) Internationale Anmeldenummer: PCT/EP2008/006615
(87) Internationale Veröffentlichungsnummer: WO 2009/092403

(56) Entgegenhaltungen:
- WO-A-2004/052511
- WO-A-2004/085036
- WO-A-2005/044955

## Beschreibung

Die Erfindung bezieht sich auf ein Verfahren zur Regeneration einer bei der Reinigung von Gasen anfallenden aminhaltigen Waschlösung, in der CO₂ und Schwefelverbindungen chemisch gebunden sind, sowie eine zur Durchführung des Verfahrens geeignete Anlage. Verschiedene Gase, wie z.B. Biogas, Abgase aus chemischen Prozessen, Raffineriegas oder Erdölbegleitgas, enthalten CO₂ und Schwefelverbindungen, die vor der weiteren Nutzung oder Ableitung dieser Gase in die Atmosphäre mittels einer Wäsche aus diesen entfernt werden müssen. Hierfür kommen unter anderem physikalische oder chemische Gaswäscheverfahren zur Anwendung, wobei eine chemische Wäsche vorzugsweise mittels einer aminhaltigen Waschlösung erfolgt, in der abgetrenntes CO₂ und Schwefelverbindungen chemisch gebunden werden. Aus Wirtschaftilchkeitsgründen ist es sinnvoll, die verunreinigte aminhaltige Waschlösung zu regenerieren, damit diese für eine erneute Verwendung im Kreislauf gefahren werden kann.

In der DE 10 2005 051 952 B3 ist im Zusammenhang mit der Herstellung von Methan und flüssigem Kohlendioxid aus Raffinerie- oder Biogas eine Verfahrensweise zur Regenerierung einer aminhaltigen Waschlösung beschrieben, in der ausschließlich CO₂ gebunden ist. Dabei wird die aus einer Absorptionskolonne austretende verunreinigte Waschlösung auf einen Druck von 65 bar komprimiert und in einem Wärmetauscher auf eine Temperatur von ca. 175 °C erwärmt. Unter diesen Bedingungen entweichen bereits etwa 10 % des im Waschwasser enthaltenen Kohlendioxids in die Gasphase. Durch eine weitere Erwärmung der Waschlösung auf eine Temperatur von 209 °C wird eine über 99%ige Entfernung des Kohlendioxids aus der Waschlösung erreicht. Die Waschlösung wird nachfolgend in eine Desorptionskolonne eingeleitet, in der unter Zuführung weiterer Wärme die Restentfernung des Kohlendioxids erfolgt. Die regenerierte Waschlösung wird anschließend unter Wärmerückgewinnung stufenweise bis auf 10 °C abgekühlt.

Von Nachteil sind der hohe Betriebsdruck und die hohen Temperaturen. Letzteres führt zu Verlusten an Waschlösung und erhöht die Gefahr von Zersetzungen. Die gereinigte Waschlösung enthält noch geringe Mengen an Verunreinigungen, die sich bei der Wiederverwendung nachteilig auswirken.

WO 2004/052511 A offenbart die Regenerierung eines physikalischen Lösungsmittels in einer Reihe von Entspannungsstufen.

WO 2005/044355 A offenbart die Regenerierung eines Lösungsmittels in einer Hochdruck-Entspannungskolonne und in einer weiteren Entspannungskolonne oder Reihe von Entspannungskolonnen.

Der Erfindung liegt die Aufgabe zugrunde, ein Verfahren zur Regeneration einer bei der Reinigung von Gasen anfallenden aminhaltigen Waschlösung, in der CO₂ und Schwefelverbindungen chemisch gebunden sind, zu schaffen, das eine wirtschaftlichere Betriebsweise ermöglicht und mit dem eine hochreine Waschlösung erhalten wird.

Ferner soll eine zur Durchführung des Verfahrens geeignete Anlage geschaffen werden. Erfindungsgemäß wird die Aufgabe verfahrenstechnisch durch die im Anspruch 1 angegebenen Merkmale gelöst. Vorteilhafte Weiterbildungen der Verfahrensweise sind in den Ansprüchen 2 bis 10 angegeben. Eine zur Durchführung des Verfahrens geeignete Anlage ist Gegenstand des Anspruchs 11. Vorteilhafte Ausgestaltungen der Anlage sind in den Ansprüchen 12 und 13 angegeben.

Die verunreinigte Waschlösung wird bis auf eine Temperatur von mindestens 110 °C, gegebenenfalls bis 135 °C, vorzugsweise 125 °C, erwärmt und auf einen Druck von mindestens 4 bar, vorzugsweise 6 bis 12 bar, komprimiert und nachfolgend in einer ersten Entspannungsstufe entspannt, vorzugsweise auf einen Druck von 1 bis 8 bar, wobei der überwiegende Anteil an CO₂ und Schwefelverbindungen als Gasstrom aus der Waschlösung abgetrennt wird (Verfahrensschritt a)).

Anschließend wird die abgezogene Waschlösung auf eine Temperatur von mindestens 130 °C, gegebenenfalls bis 160 °C, vorzugsweise 145 °C, erwärmt und auf einen Druck von mindestens 4 bar, vorzugsweise 5 bis 8 bar, komprimiert und in einer zweiten Entspannungsstufe auf einen Druck entspannt, der mindestens um 0,5 bar, gegebenenfalls um bis zu 3 bar, höher ist als der Entspannungsdruck der ersten Entspannungsstufe, wobei der überwiegende Anteil an noch vorhandenem CO₂ und Schwefelverbindungen als Gasstrom aus der Waschlösung abgetrennt wird (Verfahrensschritt b)). In der ersten und zweiten Entspannungsstufe erfolgt die Entspannung vorzugsweise als Flashentspannung.

Die aus der zweiten Entspannungsstufe abgezogene Waschlösung wird bis auf eine Temperatur unterhalb von 70 °C abgekühlt und in einer dritten Entspannungsstufe auf Normaldruck entspannt, wobei noch vorhandene Restmengen an lösbarem CO₂ abgetrennt werden und dieser Teilstrom als vollständig gereinigte Waschlösung bis auf Normaltemperatur abgekühlt wird (Verfahrensschritt c)).

Die nach der ersten Entspannungsstufe und/oder zweiten Entspannungsstufe abgezogene Waschlösung wird in zwei Teilströme aufgeteilt. Ein Teilstrom wird im Kreislauf in die jeweilige Entspannungsstufe zurückgeführt und hinsichtlich Temperatur und Druck auf die Bedingungen der zugehörigen Entspannungsstufe eingestellt. Während der Entspannung werden aus diesem Teilstrom noch vorhandene Restmengen an Schwefelverbindungen abgetrennt. Der andere, nicht ausgekreiste Teilstrom wird entweder nach Verfahrensschritt b) oder c) weiterbehandelt.

Die ausgekreiste Waschlösung wird zum Beispiel auf einen Druck von 5 bis 10 bar komprimiert und auf eine Temperatur erwärmt, die um mindestens 2 bis 10 °C höher ist, als die Betriebstemperatur in der jeweiligen Entspannungsstufe.

In der zweiten Entspannungsstufe werden noch vorhandene Restmengen an lösbarem CO₂ und Schwefelverbindungen abgetrennt. In der dritten Entspannungsstufe kommt es bei den vorliegenden Bedingungen (Temperatur und Druck) zu einer Rücklösung von CO₂, das aus der Waschlösung entweicht. Die Waschlösung besitzt nunmehr einen maximal möglichen Reinheitsgrad. Nach erfolgter Abkühlung auf Normaltemperatur kann diese in den Waschkreislauf zur Abtrennung von CO₂ und Schwefelverbindungen aus Biogas zurückgeführt werden.

Die vorgeschlagene Verfahrensweise ermöglicht eine Regenerierung der verunreinigten Waschlösung mit unterschiedlich beladenen Stoffen bei vergleichsweise geringen Drücken und Temperaturen, aufgrund der vorgesehenen mehrstufigen druck- und temperaturgeregelten Entspannung. Außerdem bleibt der in der Waschlösung enthaltene Anteil an Wasser erhalten, da mittels der Brüden abgeführte Anteile an verdampftem Wasser nach erfolgter Kondensation wieder der gereinigten Waschlösung zugeführt werden.

Die mehrstufige Entspannung der verunreinigten Waschlösung ermöglicht eine selektivere Abtrennung von CO₂, H₂S und COS (organische Schwefelverbindungen). Bedingt durch die unterschiedlichen Druck- und Temperaturbedingungen kann die bei den einzelnen Flashentspannungen mit entweichende Menge an Wasser aus der Waschlösung deutlich reduziert werden. Da Wasser eine um den Faktor 5 höhere Verdampfungswärme als die aus den Gasen zu entfernenden Komponenten besitzt, kann damit der erforderliche Energieeintrag für die notwendige Regeneration erheblich gesenkt werden.

Das in den Entspannungsstufen gemäß den Verfahrensschritten a) und b) als Brüden abgezogene Gasgemisch aus Kohlendioxid, Wasser und Schwefelverbindungen wird als Wärmeträger zur Erwärmung der verunreinigten Waschlösung eingesetzt und dabei bis auf Normaltemperatur abgekühlt.

Die in der zweiten Entspannungsstufe anfallende gereinigte Waschlösung wird als Wärmeträger zur Erwärmung der verunreinigten Waschlösung eingesetzt.

Dadurch wird eine energetisch besonders vorteilhafte Verfahrensweise ermöglicht, wobei zusätzlich noch Warmwasser erhalten wird.

Aus dem auf Normaltemperatur abgekühlten Gasgemisch (Brüden) wird in einem Abscheider kondensiertes Wasser abgetrennt. Dieses wird in dosierter Menge mit der vollständig gereinigten Waschlösung zur Aufrechterhaltung des erforderlichen Amingehaltes vermischt.

Der aus der ersten und zweiten Entspannungsstufe abgeführte Gasstrom (CO₂ und Schwefelverbindungen) kann erforderlichenfalls in einer nachgeschalteten Entschwefelungsanlage entschwefelt werden.

Die Reaktionszeiten in der ersten Entspannungsstufe können durch eine Ultraschallbehandlung der Waschlösung weiter reduziert werden. Die Verweil- bzw. Reaktionszeit in dieser Stufe kann somit bei gleichem Abscheideergebnis um bis zu ca. 30 % verringert werden. Der zweiten Entspannungsstufe kann nach der gleichen Verfahrensweise noch eine dritte oder vierte Entspannungsstufe nachgeschaltet werden.

Der pH-Wert der gereinigten Waschlösung kann gemessen werden und dient als Regelgröße für die Einstellung der Temperatur der verunreinigten Waschlösung in den Entspannungsstufen.

Innerhalb einer Entspannungsstufe beträgt das Verhältnis zwischen der ausgekreisten Teilstrommenge und der zugeführten Menge an verunreinigter Waschlösung 0,2 bis 5.

Die vorgesehene Auskreisung einer Teilmenge an Waschlösung in der ersten und/oder zweiten Entspannungsstufe hat folgende Vorteile.

So kann bei Auskreisung einer kleinen Teilstrommenge ein wirtschaftlicher Warmhaltebetrieb mit geringem Energieverbrauch realisiert werden. Die Teilstrommenge, der Druck und die Temperatur des Teilstromkreislaufes können weiter den im Biogas enthalten Mengen an Schwefelverbindungen angepasst und als Regelgröße verwendet werden.

Die hohe Reinheit der regenerierten Waschlösung führt beim weiteren Einsatz zur Reinigung von Biogas zu weiteren Vorteilen.

Die sich einstellende Arbeitskapazität dieser Waschlösung liegt bezüglich der Abtrennung von Kohlendioxid von bis zu über 85 g/l und der Schwefelverbindungen von bis zu über 15 g/l. Damit kann die gleiche Trennleistung bezüglich CO₂ mit einer kleineren Waschmittelmenge und vor allem bei einer gleichzeitig größeren Menge an Schwefelverbindungen als bisher erfolgen. Infolge dessen werden mit der kleineren Waschmittelmenge auch geringere Mengen an Kohlenwasserstoffen im Waschwasser gelöst. Die sich bei dieser Verfahrensweise ergebenden Methanverluste liegen damit im Bereich von unter 0,05 %. Durch den Einsatz geringerer Waschmittelmengen reduziert sich der Energieverbrauch.

Eine zur Durchführung des Verfahrens geeignete Anlage umfasst eine Kreislaufleitung zur Führung der Waschlösung, in die in Strömungsrichtung eine erste Pumpe, mindestens ein Wärmetauscher, mindestens zwei in Reihe geschaltete Entspannungsvorrichtungen und ein erster Abscheider eingebunden sind. Zwischen der ersten und der zweiten Entspannungsvorrichtung sind in die Kreislaufleitung eine zweite Pumpe und ein nachgeschalteter Wärmetauscher eingebunden. Nach mindestens einer der Entspannungsvorrichtungen zweigt von der Kreislaufleitung eine Leitungsschlaufe ab, die mit der Entspannungsvorrichtung in Verbindung steht, zur Auskreisung einer Teilmenge an gereinigter Waschlösung und deren Rückführung in die Entspannungsvorrichtung. In die Leitungsschlaufe sind eine dritte Pumpe und ein weiterer Wärmetauscher integriert.

Am Kopf der Entspannungsvorrichtungen ist eine Leitung zur Abführung der Brüden angeordnet, die mit einem zweiten Abscheider zur Abtrennung des kondensierten Wassers in Verbindung steht. In diese Leitung ist mindestens ein Wärmetauscher zur Abkühlung der Brüden eingebunden. Der zweite Abscheider ist über eine Leitung mit dem ersten Abscheider verbunden, zur dosierten Weiterleitung von kondensiertem Wasser.

Zur stufenweisen Erwärmung der verunreinigten Waschlösung auf die erforderliche Betriebstemperatur sind vor der ersten Entspannungsvorrichtung drei in Reihe geschaltete Wärmetauscher angeordnet. Der erste Wärmetauscher ist in die die Brüden führende Leitung und der zweite Wärmetauscher in die die gereinigte, heiße Waschlösung führende Leitung eingebunden. Der dritte Wärmetauscher ist mittels eines externen Wärmeträgers beheizbar und zeitweise zuschaltbar. In der Regel wird dieser nur während der Anfahrphase genutzt.

Die vorgeschlagene Anlage kann für einen breiten Leistungsbereich genutzt werden und zeichnet sich durch einen energetisch hohen Wirkungsgrad aus.

Die Erfindung soll nachstehend an einem Ausführungsbeispiel erläutert werden. In der zugehörigen Zeichnung ist das Funktionsschema einer Anlage zur Regeneration von verunreinigter Waschlösung, in der CO₂ und Schwefelverbindungen als Verunreinigungen gebunden sind, gezeigt.

Die Anlage ist z.B. Bestandteil einer Biogasaufbereitungsanlage, in der im Biogas enthaltenes CO₂ und Schwefelverbindungen mittels einer Aminwäsche entfernt werden. Um eine Wiederverwendung der aminhaltigen Waschlösung zu ermöglichen, ist es erforderlich, aus dieser die Verunreinigungen, CO₂ und Schwefelverbindungen, vollständig zu entfernen. Die anfallende verunreinigte Waschlösung (ca. 9 m³/h) mit einer Aminkonzentration von 40 %, einer Temperatur von 38 °C und einer Beladung von 85 g CO₂/l und 6 g H₂S/l wird über die Leitung 1 zugeführt und mittels der Kreislaufpumpe P1 über drei in Reihe geschaltete Wärmetauscher W1, W2 und W3 geleitet und in diesen stufenweise, auf ca. 65 °C und nachfolgend bis auf ca.125 °C, erwärmt und bis auf einen Druck von 7,5 bar komprimiert. Anschließend gelangt die heiße, verunreinigte Waschlösung in eine erste Flashentspannungsvorrichtung F1 (erste Entspannungsstufe) und wird in dieser auf einen Druck von ca. 4,5 bar entspannt. Während des Entspannungsvorganges werden ca. 60 % der in der Waschlösung chemisch gebundenen Verunreinigungen (Kohlendioxid und Schwefelverbindungen) innerhalb einer Nachreaktionszeit von unter 400 s und einer Reaktionstemperatur von ca. 125 °C freigesetzt, die am Kopf der Flashentspannungsvorrichtung F1 als Brüden über die Leitung 6 abgezogen werden. Unter diesen Bedingungen reduziert sich in der Waschlösung der Anteil an chemisch gebundenem CO₂ von 85 g/l auf 40 g/l und an Schwefelverbindungen von 6 g/l auf 4 g/l. Die teilweise gereinigte Waschlösung wird nunmehr mittels der Pumpe P2 über die Leitung 2 einem weiteren Wärmetauscher W4 zugeführt, mittels Thermalöl als Wärmeträger auf eine Temperatur von ca. 140 °C erwärmt, auf einen Druck von 6,5 bar komprimiert, in eine zweite Flashentspannungsvorrichtung F2 (zweite Entspannungsstufe) geleitet und in dieser auf einen Druck von ca. 5,5 bar entspannt. Während der Flashentspannung werden die Anteile an chemisch gebundenem CO₂ von 40 g/l auf 22 g/l und an Schwefelverbindungen von 4 g/l auf 2,5 g/l reduziert. Die abgetrennten Verunreinigungen werden am Kopf der Flashentspannungsvorrichtung F2 als Brüden über die Leitung 6 abgezogen. Anschließend erfolgt eine weitere Druckreduzierung von 5,5 auf 4,5 bar. Dadurch wird der Wasseranteil in den Brüden deutlich reduziert und damit insgesamt weniger Energie für die Reinigung der Waschlösung benötigt. Am Boden wird die gereinigte Waschlösung über die Leitung 3 abgeführt und in zwei Teilströme aufgeteilt. Die Abzweigleitung 3b ist als Leitungsschlaufe ausgeführt, die in die Flashentspannungsvorrichtung F2 zurückgeführt ist. In diese Kreislaufleitung 3b sind eine Pumpe P3 und ein Wärmetauscher W7 eingebunden, der mittels Thermalöl als Wärmeträger beheizt wird. Somit wird kontinuierlich über die Leitung 3b ein Teilstrom an Waschlösung (18 m³/h) gepumpt und im Kreislauf gefahren. Über den zwischengeschalteten Wärmetauscher W7 wird die Temperatur der im Kreislauf gefahrenen Waschlösung auf ca. 145 °C konstant gehalten. Unter diesen Bedingungen reduziert sich in der Waschlösung der Anteil von chemisch gebundenem CO₂ von 22 g/l auf 8 g/l und an Schwefelverbindungen von 2,5 g/l auf 0,9 g/l. Damit wird insgesamt eine Waschmittelbeladung von 77 g/l für die Entfernung von Kohlendioxid und 5,1 g/l für die Entfernung von Schwefelverbindungen erreicht. Erforderlichenfalls kann noch eine weitere, nicht gezeigte Flashentspannungsstufe nachgeschaltet werden, wodurch die Beladekapazität der Waschlösung weiter geringfügig gesteigert werden kann.

Das Verhältnis zwischen der ausgekreisten Teilstrommenge und der über die Leitung 1 zugeführten Menge an verunreinigter Waschlösung beträgt 0,2 bis 5. Die über die Teilstromleitung 3a abgeführte Menge (9 m³/h) an Waschlösung mit einer Temperatur von ca.145 °C wird durch den Wärmetauscher W2 geleitet und dabei als Wärmeträger zur Erwärmung der verunreinigten Waschlösung genutzt und dadurch bis auf ca. 68 °C abgekühlt. In einem nachgeschalteten Wärmetauscher W5 wird die Waschlösung mittels Kühlwasser weiter abgekühlt (bis auf 22 °C) und druckgeregelt in den Abscheider A1 geleitet. In diesem erfolgt eine weitere Druckreduzierung von 4,5 bar auf Normaldruck. Dadurch wird eine Rücklösung von noch chemisch gebundenem CO₂ bewirkt, wodurch ein maximal möglicher Reinheitsgrad der Waschlösung erzielt wird. Das am Kopf des Abscheiders A1 abströmende Gasgemisch (CO₂ und Schwefelverbindungen) wird über die Leitung 9 abgeführt.

Das am Kopf der Flashentspannungsvorrichtungen F1 und F2 über die Leitung 6 als Brüden abgezogene Gasgemisch aus Kohlendioxid. Wasser und Schwefelverbindungen wird über den Wärmetauscher W1 geleitet und als Wärmeträger zur Erwärmung der verunreinigten Waschlösung genutzt und dabei auf eine Temperatur von ca. 60 °C abgekühlt, anschließend in einem nachgeschalteten Wärmetauscher W6 mittels Kühlwasser weiter bis auf Normaltemperatur (ca. 25 °C) abgekühlt und in den Abscheider A2 geleitet. In diesem wird kondensiertes Wasser abgeschieden, das in dosierter Menge über die Leitung 7 in den Abscheider A1 geleitet wird und sich mit in diesem befindlicher, vollständig gereinigter Waschlösung vermischt. Der Gasstrom aus Kohlendioxid und Schwefelverbindungen wird über die Leitung 8 abgeführt. Der Arbeitsdruck im Abscheider A2 entspricht in etwa dem Druck in der Flashentspannungsvorrichtung F1 (ca. 4,5 bar).

Die im Abscheider A1 anfallende, vollständig gereinigte Waschlösung (9 m³/h), die frei von CO₂ und Schwefelverbindungen ist, wird mittels der Pumpe P4 über die Leitung 4 dem Gaswäscher der Biogasaufbereitungsanlage zugeführt. In der Leitung 4 wird der pH-Wert der gereinigten Waschlösung überwacht und erforderlichenfalls die über die Leitung 7 zugeführte Menge an Kondenswasser eingestellt.

Aufgrund der hohen Beladungskapazität der aminhaltigen Waschlösung kann der Waschprozess im Vergleich zu der bekannten Verfahrensweise mit einer deutlich höheren spezifischen Leistung durchgeführt werden. Demzufolge werden für den Waschprozess geringere spezifische Waschmittelmengen benötigt. Da sich Kohlenwasserstoffe (im Biogas enthaltenes Methan) bedingt im Waschmittel lösen, werden bei Einsatz geringerer Waschmittelmengen geringere Mengen an Kohlenwasserstoffe gelöst, so dass das gereinigte Biogas einen höheren Methangehalt aufweist.

Die vorgeschlagene Lösung zur Regeneration der verunreinigten Waschlösung zeichnet sich auch durch eine energetisch effektive Betriebsweise aus, da nur die Wärmetauscher W3, W4 und W7 mittels extern zugeführtem Thermalöl als Wärmeträger beheizt werden müssen, wobei der Wärmetauscher W3 in der Regel nur während der Anfahrphase in Betrieb genommen wird. Die Zu- und Abführung des Thermalöls erfolgt über die Leitungen 5. Die Wärmetauscher W1 und W2 werden mittels der im Prozess anfallenden heißen Brüden bzw. der gereinigten Waschlösung beheizt. In den Wärmetauschern W5 und W6 wird zusätzlich durch Wärmerückgewinnung Warmwasser erzeugt, das anderweitig, z. B. als Wärmetauschermedium in der Biogasaufbereitung, genutzt werden kann. Das Kühlwasser wird über die Leitungen 10 zu- und als Warmwasser abgeführt.

Die über die Leitungen 8 und 9 abgeführten Gasströme (CO₂ und Schwefelverbindungen) werden einer gesonderten Verwendung zugeführt.

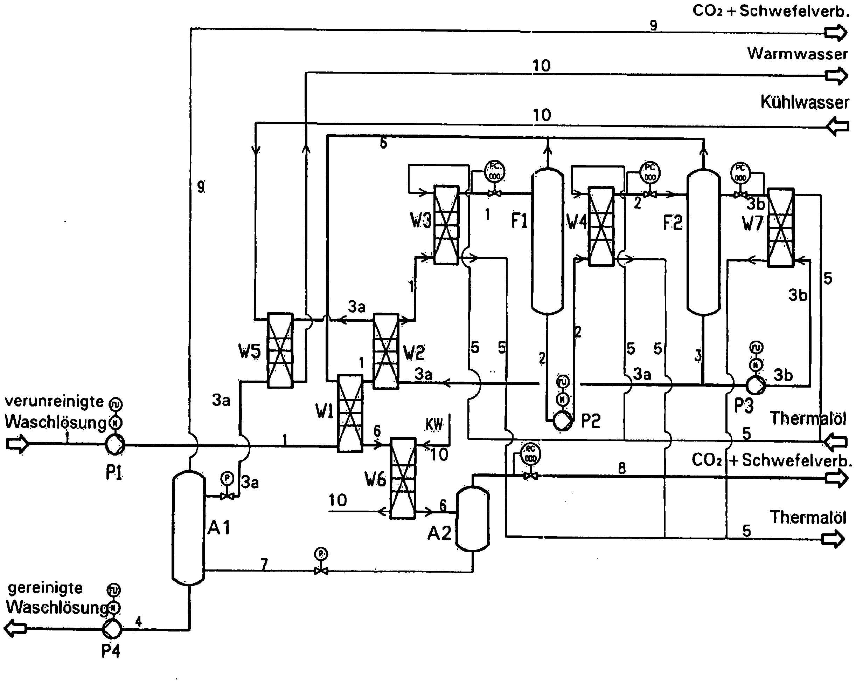

## Patentansprüche

1. Verfahren zur Regeneration einer bei der Reinigung von Gasen anfallenden aminhaltigen Waschlösung, in der CO₂ und Schwefelverbindungen chemisch gebunden sind, wobei die verunreinigte Waschlösung in mehreren Stufen auf jeweils eine höhere Temperatur erhitzt wird und dabei die Verunreinigungen aus der Waschlösung abgetrennt werden, und die gereinigte Waschlösung unter Wärmerückgewinnung abgekühlt wird, **dadurch gekennzeichnet, dass**
a) die verunreinigte Waschlösung bis auf eine Temperatur von mindestens 110 °C erwärmt und auf einen Druck von mindestens 4 bar komprimiert und nachfolgend in einer ersten Entspannungsstufe entspannt wird, wobei der überwiegende Anteil an CO₂ und Schwefelverbindungen als Gasstrom aus der Waschlösung abgetrennt wird,
b) die abgezogene Waschlösung auf eine Temperatur von mindestens 130 °C erwärmt und auf einen Druck von mindestens 4 bar komprimiert und in einer zweiten Entspannungsstufe auf einen Druck entspannt wird, der mindestens um 0,5 bar höher ist als der Entspannungsdruck der ersten Entspannungsstufe, wobei der überwiegende Anteil an noch vorhandenem CO₂ und Schwefelverbindungen als Gasstrom aus der Waschlösung abgetrennt wird,
c) die aus der zweiten Entspannungsstufe abgezogene Waschlösung bis auf eine Temperatur unterhalb von 70 °C abgekühlt und in einer dritten Entspannungsstufe auf Normaldruck entspannt wird, wobei noch vorhandene Restmengen an lösbarem CO₂ abgetrennt werden und dieser Teilstrom als vollständig gereinigte Waschlösung bis auf Normaltemperatur abgekühlt wird, und
d) die nach der ersten Entspannungsstufe und/oder zweiten Entspannungsstufe abgezogene Waschlösung in zwei Teilströme aufgeteilt wird, wobei ein Teilstrom im Kreislauf in die jeweilige Entspannungsstufe zurückgeführt und hinsichtlich Temperatur und Druck auf die Bedingungen der zugehörigen Entspannungsstufe eingestellt wird, wobei während der Entspannung aus diesem Teilstrom noch vorhandene Restmengen an Schwefelverbindungen abgetrennt werden, und der andere Teilstrom entweder nach Verfahrensschritt b) oder c) weiterbehandelt wird.

2. Verfahren nach Anspruch 1, **dadurch gekennzeichnet, dass** das in den Entspannungsstufen gemäß den Verfahrensschritten a) und b) als Brüden abgezogene Gasgemisch aus Kohlendioxid, Wasser und Schwefelverbindungen als Wärmeträger zur Erwärmung der verunreinigten Waschlösung eingesetzt und bis auf Normaltemperatur abgekühlt wird.

3. Verfahren nach einem der Ansprüche 1 oder 2, **dadurch gekennzeichnet, dass** aus dem auf Normaltemperatur abgekühlten Gasgemisch (Brüden) kondensiertes Wasser abgeschieden und in dosierter Menge mit der vollständig gereinigten Waschlösung vermischt wird.

4. Verfahren nach einem der Ansprüche 1 bis 3, **dadurch gekennzeichnet, dass** die verunreinigte Waschlösung vor der Entspannung bis auf einen Druck von 6 bis 12 bar komprimiert und während der Entspannung bis auf einen Druck von 1 bis 8 bar entspannt wird.

5. Verfahren nach einem der Ansprüche 1 bis 4, **dadurch gekennzeichnet, dass** in den Entspannungsstufen gemäß den Verfahrensschritten a) und b) eine Flashentspannung durchgeführt wird.

6. Verfahren nach einem der Ansprüche 1 bis 5, **dadurch gekennzeichnet, dass** die in der zweiten Entspannungsstufe anfallende gereinigte Waschlösung als Wärmeträger zur Erwärmung der verunreinigten Waschlösung eingesetzt wird.

7. Verfahren nach einem der Ansprüche 1 bis 6, **dadurch gekennzeichnet, dass** mindestens der aus der ersten und zweiten Entspannungsstufe abgeführte Gasstrom in einer nachgeschalteten Entschwefelungsanlage entschwefelt wird.

8. Verfahren nach einem der Ansprüche 1 bis 7, **dadurch gekennzeichnet, dass** während der ersten Entspannungsstufe die Waschlösung einer Ultraschallbehandlung ausgesetzt wird.

9. Verfahren nach einem der Ansprüche 1 bis 8, **dadurch gekennzeichnet, dass** der pH-Wert der gereinigten Waschlösung gemessen und als Regelgröße für die Einstellung der Temperatur der verunreinigten Waschlösung in den Entspannungsstufen dient.

10. Verfahren nach einem der Ansprüche 1 bis 9, **dadurch gekennzeichnet, dass** in einer Entspannungsstufe das Verhältnis zwischen der Menge des in die jeweilige Entspannungstufe zurückgefürken Teilstroms und der zugeführten Menge an verunreinigter Waschlösung 0,2 bis 5 beträgt.

11. Anlage zur Durchführung des Verfahrens nach mindestens einem der vorhergehenden Ansprüche, **dadurch gekennzeichnet**, das eine Kreislaufleitung (1, 2, 3, 3a, 4) zur Führung der Waschlösung vorgesehen ist, wobei in Strömungsrichtung in diese eine erste Pumpe (P1), mindestens ein Wärmetauscher (W1, W2, W3), mindestens zwei in Reihe geschaltete Entspannungsvorrichtungen (F1, F2), wobei zwischen den beiden Entspannungsvorrichtungen (F1, F2) eine zweite Pumpe (P2) und ein nachgeschalteter Wärmetauscher (W4) angeordnet sind, und ein erster Abscheider (A1) eingebunden sind, und mindestens nach einer Entspannungsvorrichtung (F2) in die Kreislaufleitung (3) eine mit der Entspannungsvorrichtung (F2) in Verbindung stehende Leitungsschlaufe (3b) zur Auskreisung einer Teilmenge an gereinigter Waschlösung eingebunden ist, wobei in die Leitungsschlaufe (3a) eine dritte Pumpe (P3) und ein Wärmetauscher (W7) integriert sind.

12. Anlage nach Anspruch 11, **dadurch gekennzeichnet, dass** am Kopf der Entspannungsvorrichtungen (F1, F2) eine Leitung (6) zur Abführung der Brüden angeordnet ist, die mit einem zweiten Abscheider (A2) zur Abtrennung des kondensierten Wassers in Verbindung steht, wobei in diese Leitung mindestens ein Wärmetauscher (W1, W6) zur Abkühlung der Brüden eingebunden ist, und der zweite Abscheider über eine Leitung (7) zur Weiterleitung von kondensiertem Wasser mit dem ersten Abscheider (A1) verbunden ist.

13. Anlage nach einem der Ansprüche 11 oder 12, **dadurch gekennzeichnet, dass** zur stufenweise Erwärmung der verunreinigten Waschlösung auf die erforderliche Betriebstemperatur vor der ersten Entspannungsvorrichtung (F1) drei in Reihe geschaltete Wärmetauscher (W1, W2, W3) angeordnet sind, wobei der erste Wärmetauscher (W1) in die die Brüden führende Leitung (6) und der zweite Wärmetauscher (W2) in die die gereinigte, heiße Waschlösung führende Leitung (3a) eingebunden ist, und der dritte Wärmetauscher (W3) mittels eines externen Wärmeträgers beheizbar und zeitweise zuschaltbar ist.

## Claims

1. Method of regenerating an amine-containing scrubbing solution which is obtained during gas purification and in which the CO₂ and sulfur compounds are chemically bound, with the contaminated scrubbing solution heated in several stages each time to a higher temperature and the impurities removed from the scrubbing solution in the process and the purified scrubbing solution cooled with the recovery of waste heat, **characterized in that**
a) the contaminated scrubbing solution is heated to a temperature of at least 110°C and compressed to a pressure of at least 4 bar and subsequently expanded in a first expansion stage, with the major proportion of CO₂ and sulfur compounds removed from the scrubbing solution as a gas stream,
b) the scrubbing solution removed is heated to a temperature at least 130°C and compressed to a pressure of at least 4 bar and expanded in a second expansion stage to a pressure that is at least 0.5 bar higher than the expansion pressure of the first expansion stage, with the major proportion of the CO₂ and sulfur compounds still present removed from the scrubbing solution as a gas stream
c) the scrubbing solution removed in the second expansion stage is cooled to a temperature below 70°C and expanded to normal pressure in a third expansion stage with the residual amounts of soluble CO₂ still present removed and this partial stream cooled to normal temperature as a completely purified scrubbing solution, and
d) the scrubbing solution removed after the first expansion stage and/or second expansion stage is subdivided into two partial streams, with one partial stream in the circuit returned to the respective expansion stage and its temperature and pressure adjusted to the conditions of the associated expansion stage, with residual amounts of sulfur compounds still present removed from this partial stream during the expansion and with the other partial stream further processed in accordance with either process step b) or c).

2. Method according to claim 1, **characterized in that** the gas mixture composed of carbon dioxide, water and sulfur compounds removed in the expansion stages as vapors in accordance with the process steps a) and b) is used as a heat carrier for heating the contaminated scrubbing solution and is cooled to normal temperature.

3. Method according to one of the claims 1 or 2, **characterized in that** condensed water is removed from the gas mixture (vapors) which have been cooled to normal temperature, and the condensed water is mixed at a dosed amount with the completely purified scrubbing solution.

4. Method according to one of the claims 1 to 3, **characterized in that** the contaminated scrubbing solution is compressed before expansion to a pressure of 6 to 12 bar and is expanded during the expansion to a pressure of 1 to 8 bar.

5. Method according to one of the claims 1 to 4, **characterized in that** a flash expansion is carried out in the expansion stages in accordance with the process steps a) and b).

6. Method according to one of the claims 1 to 5, **characterized in that** the purified scrubbing solution obtained in the second expansion stage is used as a heat carrier for heating the contaminated scrubbing solution.

7. Method according to one of the claims 1 to 6, **characterized in that** the gas stream removed in the first and second expansion stage at least is desulfurized in a downstream desulfurization plant.

8. Method according to one of the claims 1 to 7, **characterized in that** the scrubbing solution undergoes ultrasonic treatment during the first expansion stage.

9. Method according to one of the claims 1 to 8, **characterized in that** the pH of the purified scrubbing solution is measured and serves as a control variable for adjusting the temperature of the contaminated scrubbing solution in the expansion stages.

10. Method according to one of the claims 1 to 9, **characterized in that** in an expansion stage the ratio of the amount fed of the partial stream led back in the respective expansion stage to the amount fed in of contaminated scrubbing solution is 0.2 to 5.

11. System for carrying out the method in accordance with at least one of the previous claims **characterized in that** a circulation line (1, 2, 3, 3a, 4) for conveying the scrubbing solution is planned, with a first pump (P1), at least one heat exchanger (W1, W2, W3), at least two expansion devices (F1, F2) connected in series and a first separator (A1) integrated into the said circulation line in the direction of flow, with a second pump (P2) and a downstream heat exchanger (W4) arranged between both expansion devices (F1, F2), with a loop line (3b) integrated into the circulation line (3) downstream of at least one of the expansion devices (F2) and connected to the expansion device (F2) for removing a partial amount of purified scrubbing solution from the circuit and with a third pump (P3) and a heat exchanger (W7) integrated into the loop line (3a).

12. System according to claim 11, **characterized in that** a line (6) for removing the vapors is arranged at the head of the expansion devices (F1, F2), said line being connected to a second separator (A2) for removing the condensed water, with at least one heat exchanger (W1, W6) for cooling the vapors integrated into this line, and the second separator connected to the first separator (A1) via a line (7) for conveying condensed water.

13. System according to claims 11 or 12, **characterized in that** three heat exchangers (W1, W2, W3) connected in series for the gradual heating of the contaminated scrubbing solution to the required operating temperature are arranged upstream of the first expansion device (F1), with the first heat exchanger (W1) integrated into the line (6) conveying the vapors and the second heat exchanger (W2) integrated into the line (3a) conveying the purified, hot scrubbing solution, and the third heat exchanger (W3) capable of being heated by means of an external heat carrier and capable of being switched on intermittently.

## Revendications

1. Procédé pour la régénération d'une solution d'amine lavante produite lors de la purification de gaz dans laquelle des composés CO₂ et des composés de souffre sont liés chimiquement, la solution lavante impure étant portée en plusieurs étapes à chaque fois à une température plus élevée, ceci séparant les impuretés de la solution lavante, et la solution lavante purifiée étant refroidie en récupérant la chaleur, **caractérisé en ce que**
a) la solution lavante impure est chauffée jusqu'à une température d'au moins 190°C et comprimée jusqu'à une pression d'au moins 4 bar et détendue ensuite au cours d'une première étape de détente, la part la plus importante de CO₂ et de composés de souffre étant isolée de la solution lavante sous forme de courant gazeux,
b) la solution lavante soutirée est chauffée jusqu'à une température d'au moins 130°C et comprimée jusqu'à une pression d'au moins 4 bar et détendue, au cours d'une seconde étape de détente, jusqu'à une pression d'au moins 0,5 bar supérieure à la pression de détente de la première étape de détente, la part la plus importante de CO₂, encore présent, et de composés de souffre étant isolée de la solution lavante sous forme de courant gazeux,
c) la solution lavante soutirée au cours de la seconde étape de détente est refroidie jusqu'à une température inférieure à 70°C et détendue, au cours d'une troisième étape de détente, jusqu'à une pression normale, les quantités résiduelles encore présentes de CO₂ soluble étant isolées et ce courant partiel étant refroidi jusqu'à une température normale sous forme de solution lavante entièrement purifiée, et
d) la solution lavante soutirée au terme de la première étape de détente et/ou de la seconde étape de détente est divisée en deux courants partiels, l'un des courants partiels étant ramené dans le circuit à l'étape de détente respective et adapté, en termes de température et de pression, aux conditions de l'étape de détente associée, les quantités résiduelles encore présentes de composés de souffre étant isolées de ce courant partiel pendant la détente, et l'autre courant partiel étant retraité selon l'étape de procédé soit b) soit c).

2. Procédé selon la revendication 1, **caractérisé en ce que** le mélange gazeux de dioxyde de carbone, d'eau et de composés de souffre, soutiré sous forme de vapeur au cours des étapes de détente conformément aux étapes de procédé a) et b), est utilisé comme caloporteur destiné à réchauffer la solution lavante impure et est refroidi jusqu'à une température normale.

3. Procédé selon l'une quelconque des revendications 1 ou 2, **caractérisé en ce que** l'eau condensée est séparée du mélange gazeux (vapeur) refroidi jusqu'à une température normale et mélangée en quantité dosée à la solution lavante entièrement purifiée.

4. Procédé selon l'une quelconque des revendications 1 à 3, **caractérisé en ce qu'**avant d'être détendue, la solution lavante impure est comprimée jusqu'à une pression comprise entre 6 et 12 bar et détendue au cours de la détente jusqu'à une pression comprise entre 1 un 8 bar.

5. Procédé selon l'une quelconque des revendications 1 à 4, **caractérisé en ce qu'**une détente éclair est réalisée au cours des étapes de détente conformément aux étapes de procédé a) et b).

6. Procédé selon l'une quelconque des revendications 1 à 5, **caractérisé en ce que** la solution lavante purifiée produite au cours de la seconde étape de détente est utilisée comme caloporteur destiné à réchauffer la solution lavante impure.

7. Procédé selon l'une quelconque des revendications 1 à 6, **caractérisé en ce que** le courant gazeux évacué de la première et seconde étape de détente est désulfuré dans un dispositif de désulfuration placé en aval.

8. Procédé selon l'une quelconque des revendications 1 à 7, **caractérisé en ce que** la solution lavante fait l'objet d'un traitement aux ultrasons au cours de la première étape de détente.

9. Procédé selon l'une quelconque des revendications 1 à 8, **caractérisé en ce que** le pH de la solution lavante purifiée est mesuré et sert de grandeur de réglage pour le réglage de la température de la solution lavante impure au cours des étapes de détente.

10. Procédé selon l'une quelconque des revendications 1 à 9, **caractérisé en ce que** le rapport entre la quantité de courant partiel ramené à l'étape de détente respective et la quantité ramenée de solution lavante impure est compris entre 0,2 et 5.

11. Installation pour la mise en oeuvre du procédé selon au moins l'une des revendications précédentes, **caractérisée en ce qu'**il est prévu une conduite de circuit (1, 2, 3, 3a, 4) destinée à véhiculer la solution lavante, une première pompe (P1), au moins un échangeur de chaleur (W1, W2, W3), au moins deux dispositifs de chaleur (F1, F2) placés en série et un premier séparateur (A1) étant intégrés dans celle-ci dans le sens du courant, une seconde pompe (P2) et un échangeur de chaleur (W4) placé en aval étant disposés entre les deux dispositifs de détente (F1, F2), et une conduite en boucle (3b) reliée au dispositif de détente (F2) destinée à exclure une quantité partielle de solution lavante purifiée est intégrée dans la conduite de circuit (3) au moins en aval d'un dispositif de détente (F2), une troisième pompe (P3) et un échangeur de chaleur (W7) étant intégrés dans la conduite en boucle (3a).

12. Installation selon la revendication 11, **caractérisée en ce qu'**une conduite (6) destinée à évacuer la vapeur et reliée à un second séparateur (A2) destiné à séparer l'eau condensée est disposée à la tête des dispositifs de détente (F1, F2), au moins un échangeur de chaleur (W1, W6) destiné à refroidir la vapeur étant intégré dans cette conduite, et le second séparateur est relié au premier séparateur (A1) via une conduite (7) pour transmettre l'eau condensée.

13. Installation selon l'une quelconque des revendications 11 ou 12, **caractérisée en ce que** trois échangeurs de chaleur (W1, W2, W3), placés en série, sont disposés en amont du premier dispositif de détente (F1) pour porter par étapes la solution lavante impure à la température de service requise, le premier échangeur de chaleur (W1) étant intégré dans la conduite (6) véhiculant la vapeur et le second échangeur de chaleur (W2) étant intégré dans la conduite (3a) véhiculant la solution lavante purifiée très chaude, et le troisième échangeur de chaleur (W3) pouvant être chauffé au moyen d'un caloporteur externe et connecté par intervalles.
